# EUROPÄISCHE PATENTSCHRIFT

(11) **EP 0 991 884 B1**
(45) Veröffentlichungstag und Bekanntmachung des Hinweises auf die Patenterteilung: **29.08.2001**
(21) Anmeldenummer: 98934993.1
(22) Anmeldetag: 24.06.1998
(51) Int. Cl.: F16J 15/34

(54) **VORRICHTUNG ZUR ABDICHTUNG EINER KURBELWELLE AN IHRER AUSTRITTSTELLE AUS DEM MOTORGEHÄUSE EINES VERBRENNUNGSMOTORS MIT EINER GLEITRINGDICHTUNG**
SEALING ARRANGEMENT OF A CRANKSHAFT AT ITS EXIT FROM THE MOTOR HOUSING OF A COMBUSTION ENGINE COMPRISING A PISTON RING TYPE SEAL
DISPOSITIF D'ETANCHEITE DE LA SORTIE D'UN VILEBREQUIN DU CARTER D'UN MOTEUR A COMBUSTION COMPRENANT UNE GARNITURE ETANCHE A ANNEAU GLISSANT

(30) Priorität: 25.06.1997 DE 19726955
(43) Veröffentlichungstag der Anmeldung: 12.04.2000
(73) Patentinhaber: Burgmann Dichtungswerke GmbH & Co. KG, 82515 Wolfratshausen (DE)
(72) Erfinder: FEIGL, Peter, D-82335 Höhenrain (DE); ZIEGENBEIN, Dieter, 82538 Geretsried (DE); REINFRANK, Ulrich, D-82544 Egling (DE); KELLER, Thomas, D-82538 Geretsried (DE); JENISCH, Bernhard, D-82386 Oberhausen (DE)
(74) Vertreter: COHAUSZ HANNIG DAWIDOWICZ & PARTNER
(86) Internationale Anmeldenummer: EP9803849
(87) Internationale Veröffentlichungsnummer: WO9900618

(56) Entgegenhaltungen:
- EP-A- 0 013 678
- DE-U- 8 900 525
- FR-A- 2 378 223
- US-A- 1 820 100
- US-A- 5 454 572

## Beschreibung

Die Erfindung betrifft eine Vorrichtung zur Abdichtung einer Kurbelwelle an ihrer Austrittsstelle aus dem Motorgehäuse eines Verbrennungsmotors, umfassend eine Kurbelwelle sowie eine einzige Gleitringdichtung mit einem drehfest an der Kurbelwelle angeordneten Gleitring und einem drehfest am Motorgehäuse angeordneten Gegenring, oder mit einem drehfest am Motorgehäuse angeordneten Gleitring und einem drehfest an der Kurbelwelle angeordneten Gegenring, wobei der Gleitring axial verschiebbar ist und durch ein Federmittel in Richtung des Gegenringes beaufschlagt ist.

Üblicherweise werden Kurbelwellen an der Austrittsstelle aus dem Motorgehäuse mit Packungsringen oder mit Lippendichtungen abgedichtet.

Diese Dichtungsarten arbeiten reibungsbehaftet und unterliegen somit einem erhöhten Verschleiß, wodurch ihre Lebensdauer stark begrenzt ist. Auch kann bei verschleißenden Packungsringen bzw. Lippendichtungen Motoröl aus dem Motorgehäuse austreten. Eine solche Ölemission an die Umwelt ist besonders nachteilig. Darüber hinaus haben solche Dichtungen durch die Reibung eine relativ hohe Leistungsaufnahme, was zu einer erheblichen Verlustleistung führt.

In der DE 28 31 878 wurde daher eine Vorrichtung der eingangs genannten Art vorgeschlagen, bei der die Kurbelwelle an ihrer Austrittsstelle aus dem Kurbelraum einer Hubkolben-Brennkraftmaschine durch eine Gleitringdichtung abgedichtet ist, was zu geringeren Reibungsverlusten führt.

Dennoch verbleibt auch hier noch eine erhebliche Verlustleistung, da die Dichtung mit Öl beaufschlagt wird. Zwischen den Gleitflächen der beiden Dichtungsringe bildet sich dabei ein Ölfilm aus, der zu nicht unerheblichen Reibungsverlusten führt und zudem eine gewisse Ölleckage aufweist.

Aus der DE 37 22 110 ist der Einsatz einer gasgeschmierten Gleitringdichtung als Hilfsdichtung an einer Spalttopfpumpe bekannt. Bei dieser Dichtung, die nur kurzzeitig bei einem Ausfall der Hauptdichtung die Abdichtung der Förderflüssigkeit übernehmen soll, sind in der Dichtfläche des Gleitringes Schleppnuten eingeformt, die bei Betrieb der Dichtung ein Gaspolster in dem Dichtspalt zwischen den Dichtflächen der beiden Ringe erzeugen. Im Normalbetrieb braucht die Hilfsdichtung kein Medium abzudichten.

Aus der DE 89 00 525 ist ebenfalls eine gasgeschmierte Gleitringdichtung bekannt, die zur Abdichtung einer durch eine Wandung herausgeführten umlaufenden Welle vorgesehen ist. Das abzudichtende Medium ist dabei gasförmig. Die Hauptanwendung gasgeschmierter Gleitringdichtungen liegt in der Abdichtung von Kompressoren mit Gasen bei hohen Drücken (bis 200 bar) und/oder hohen Temperaturen (bis 200°C).

Obwohl gasgeschmierte Gleitringdichtungen aus den zuvor beschriebenen Gebieten als solche bekannt waren, schienen sie für den dauerhaften Einsatz bei der Abdichtung eines flüssigen Mediums oder eines Flüssigkeits-Gas-Gemisches an der Austrittsstelle der Kurbelwelle aus dem Motorgehäuse eines Verbrennungsmotors nicht geeignet zu sein. Sie waren bisher nur dauerhaft zur Abdichtung von rein gasförmigen Medien oder aber nur kurzzeitig zur Abdichtung von Flüssigkeiten eingesetzt worden.

Zur dauerhaften Abdichtung von flüssigen Medien wurden gasgeschmierte Gleitringdichtungen bisher nur in Doppelanordnung eingesetzt. Zusätzlich ist bei den sogenannten gasgesperrten Doppeldichtungen eine geeignete Sperrgasversorgung erforderlich, wie es beispielsweise in dem Fachbuch "Gasgeschmierte Gleitringdichtungen" der Feodor Burgmann Dichtungswerke GmbH & Co., 1. Ausgabe 1997, oder den Patentschriften EP 0 592 113 oder US 5 454 572 beschrieben ist.

Außerdem ist die Herstellung gasgeschmierter Gleitringdichtungen aufgrund der teuren Materialien wie SiC oder WC und wegen der aufwendigen Herstellung der nur wenige Mikrometer tiefen Nuten sehr kostenintensiv. Auch deshalb schien diese Dichtungsart nicht für Kurbelwellen an Verbrennungsmotoren einsetzbar zu sein.

Aufgabe der Erfindung ist es, eine konstruktiv einfache, preiswert herzustellende und klein bauende Dichtung der eingangs genannten Art zu schaffen, die bei reibungsfreiem Betrieb eine geringe Verlustleistung und eine hohe Lebensdauer erreicht sowie dauerhaft und sicher einen Ölaustritt aus dem Motorgehäuse verhindert.

Diese Aufgabe wird erfindungsgemäß dadurch gelöst, daß in der Dichtfläche des Gleitringes und/oder in der Dichtfläche des Gegenringes Nuten angeordnet sind, durch die bei Drehung der Kurbelwelle ein Luftpolster zwischen den Dichtflächen der beiden Ringe erzeugbar ist.

Der wesentliche Vorteil einer solchen Gleitringdichtung besteht darin, daß sich bei Betrieb ein Dichtspalt zwischen den zusammenwirkenden Dichtflächen des Gleitringes und des Gegenringes ausbildet, der durch ein Luft- oder Gaspolster ausgefüllt ist. Auf diese Weise arbeitet die Dichtung berührungs- und reibungsfrei. Dadurch wird nicht nur der Verschleiß erheblich reduziert und die Lebensdauer entsprechend verlängert, sondern auch die Verlustleistung wird deutlich verringert. Lediglich beim Starten und Abstellen des Motors tritt unterhalb einer minimalen Betriebsdrehzahl kurzzeitig geringe Reibung auf.

Durch die Verwendung einer erfindungsgemäßen Gleitringdichtung zur Abdichtung der Kurbelwelle an ihrer Austrittsstelle aus dem Motorgehäuse eines Verbrennungsmotors wird der Austritt von Öl aus dem Motorgehäuse sowohl bei Betrieb als auch bei Stillstand des Motors dauerhaft und sicher verhindert. Während die Dichtwirkung bei Betrieb durch ein Luftpolster im Dichtspalt zwischen den Dichtflächen der beiden Gleitringe hervorgerufen wird, liegen die Dichtflächen der beiden Gleitringe bei Stillstand unmittelbar aneinander an. Dadurch kann weder bei Betrieb noch bei Stillstand Öl aus dem Motor austreten und in die Umwelt gelangen. Dabei ist der axial verschiebbar gelagerte Gleitring durch ein Federmittel in Richtung des Gegenringes beaufschlagt und wird bei Betrieb durch das sich aufbauende Luftpolster entgegen der Belastung des Federmittels axial verschoben. Die Gleitringdichtung ist dabei so klein ausführbar, daß sie nicht mehr Bauraum als herkömmliche Packungsring- oder Lippendichtung beanspruchen.

Bei einfacher Konstruktion und Montage ist die erfindungsgemäße Gleitringdichtung preiswert herzustellen und leicht handhabbar.

Besonders vorteilhaft ist es, wenn die Nuten sich dabei von dem inneren Rand bis zu einem vom äußeren Rand entfernten Durchmesser des Gleitringes erstrecken, so daß am äußeren Rand des Gleitringes ein über den gesamten Umfang sich erstreckender Damm ausgebildet ist, der bei Stillstand des Motors an der Dichtfläche des Gegenringes anliegt und abdichtet.

Vorteilhaft ist es ferner, wenn die Nuten spiralförmig angeordnet sind. Auf diese Weise wird bei Betrieb eine Pumpwirkung erreicht, durch die die am inneren Rand anstehende Luft nach außen gefördert wird, so daß am äußeren Rand anstehendes Öl oder Ölnebel nicht in den Dichtspalt eindringen kann. Die Spiralnuten sind dabei in Abhängigkeit von der Drehrichtung der Kurbelwelle so ausgelegt, daß der durch sie hervorgerufene Pumpdruck höher ist, als der Überdruck im Motorgehäuse, der gegebenenfalls auch leicht pulsieren kann. Auch können die Nuten derart ausgeformt sein, daß die Pumpwirkung unabhängig von der Drehrichtung der Kurbelwelle eintritt.

In einer bevorzugten Ausführungsform sind der Gleitring und das Federmittel als vormontierbare Einheit in einem fest an die Kurbelwelle montierbaren Dichtungsgehäuse angeordnet.

Dieses Dichtungsgehäuse kann besonders leicht und preiswert als Blech-Ziehteil ausgebildet sein. Günstig ist es dabei ferner, wenn das Federmittel den Gleitring über einen Runddichtring beaufschlagt, der zwischen dem Dichtungsgehäuse und dem darin axial verschiebbaren Gleitring abdichtet. In diesem Fall bildet das Dichtungsgehäuse zusammen mit dem Gleitring, dem Federmittel und dem Runddichtring eine vormontierbare Einheit.

Besonders günstige Gleitwerkstoffpaarungen erhält man, wenn der Gleitring aus einem Kunstkohle-Werkstoff, insbesondere aus kunstharzimprägnierten Kohlegraphit gefertigt ist und/oder der Gegenring aus Aluminium oder aus Kunststoff, insbesondere aus glasfaserverstärktem Polyamid gefertigt ist. Dabei kann die Gleitfläche des Gegenringes vorteilhafterweise durch geeignete Maßnahmen, insbesondere durch Ionen-Implantierungsverfahren mit Stickstoff oder Argon in ihrer Obenflächenbeschaffenheit, insbesondere in ihrer Härte bearbeitet sein. Alternativ kann der Gleitring jedoch auch aus einem Kunststoff oder aus einem metallischen Werkstoff gefertigt sein.

Eine besonders einfache und schnelle Montierbarkeit der Gleitringdichtung kann dadurch erreicht werden, daß der Gegenring in den Deckel zum Abschluß des Motorgehäuses an der Austrittsstelle der Kurbelwelle integriert ist.

Bei den an sich bekannten gasgeschmierten Gleitringdichtungen werden die Nuten durch spanabhebende Bearbeitung wie Schleifen, Erodieren oder durch Laserbearbeitung in die Dichtfläche eingebracht, was sehr aufwendig und teuer ist. Bei herkömmlichen flüssigkeitsgeschmierten Gleitringdichtungen ohne Nuten in den Gleitflächen ist es bekannt, die Gleitringe im sogenannten PTS-Verfahren ("pressed to size"-Verfahren) herzustellen. Dabei werden die Gleitringe in einem Gesenk fertiggepreßt.

Eine besonders kostengünstige Herstellung gasgeschmierter Gleitringdichtungen kann dadurch erreicht werden, daß die Nuten gleichzeitig mit der Ring-Herstellung ebenfalls im PTS-Verfahren mit eingepreßt werden. Dazu wird im Preßwerkzeug ein der Form der Nuten entsprechender Kern erhaben ausgebildet. Eine spanabhebende Nachbearbeitung ist dabei nicht erforderlich. Auf diese Weise kann bei großen Stückzahlen auch bei gasgeschmierten Gleitringdichtungen eine kostengünstige Produktion erreicht werden.

Weitere Vorteile und Merkmale der Erfindung ergeben sich aus der nachfolgenden Beschreibung und den in den Zeichnungen dargestellten erfindungsgemäßen Ausführungsformen.

Es zeigen:
- Figur 1:: Querschnitt durch die Austrittsstelle der Kurbelwelle aus dem Motorgehäuse,
- Figur 2:: Vergrößerte Darstellung der Gleitringdichtung an der Austrittsstelle,
- Figur 3:: Seitenansicht eines erfindungsgemäßen Dichtungsgehäuses und
- Figur 4:: Ansicht der Gleitfläche des Gleitringes aus Richtung A in Figur 2

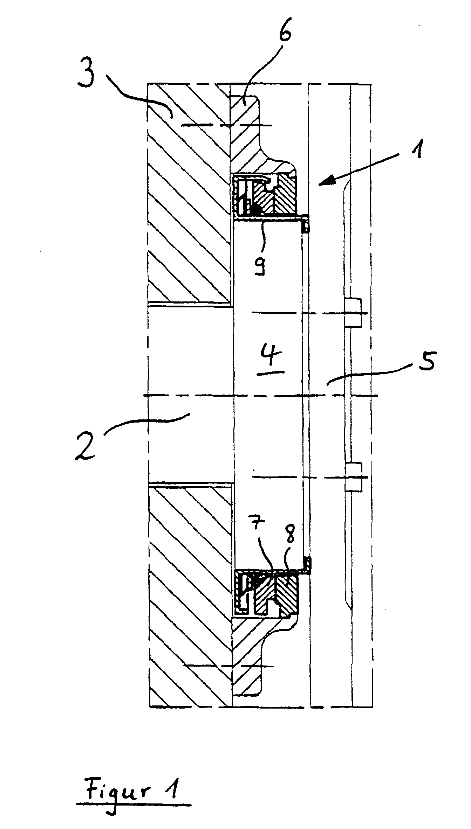

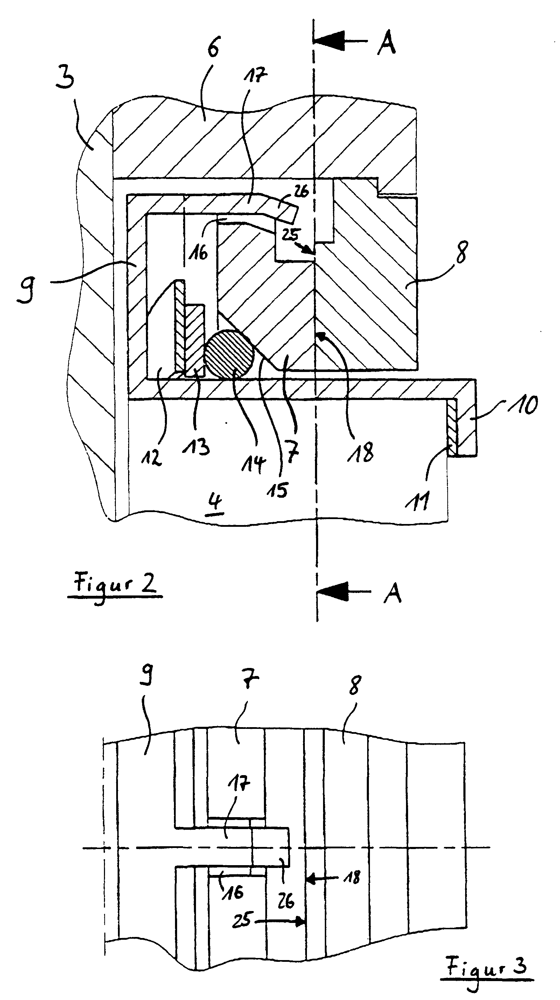

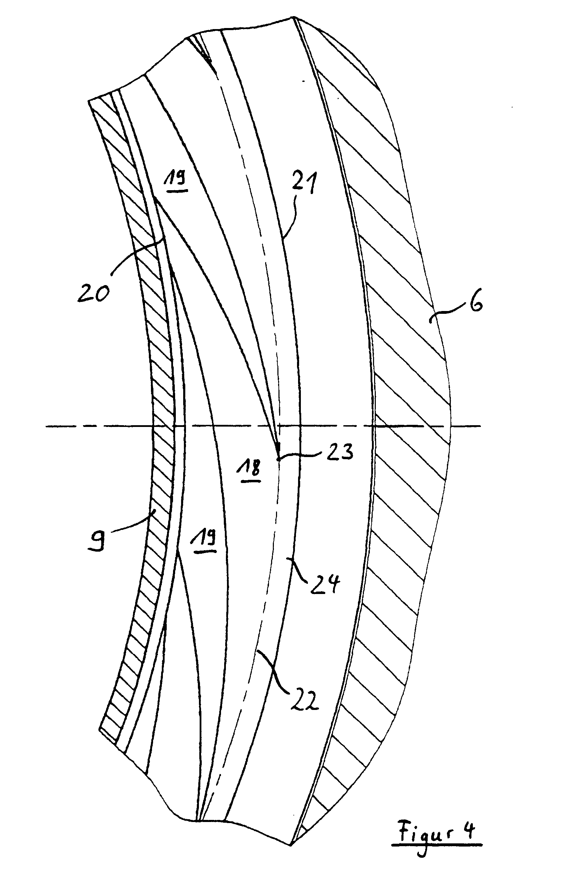

Figur 1 zeigt die Anordnung einer Gleitringdichtung 1 an der Austrittsstelle der Kurbelwelle 2 aus dem Motorgehäuse 3. Die Kurbelwelle 2 erstreckt sich nach links in das Innere des Motorgehäuses 3, was in Figur 1 nicht näher dargestellt ist. Außerhalb des Motorgehäuses 3 hat die Kurbelwelle 2 einen Wellenabsatz 4, an den stirnseitig ein Schwungrad 5 angeschraubt ist. Die Gleitringdichtung 1 befindet sich zwischen dem Wellenabsatz 4 und dem außen darum angeordneten Deckel 6.

Die Gleitringdichtung 1 hat einen Gleitring 7, der drehfest mit der Kurbelwelle 2 verbunden ist und einem über den Deckel 6 drehfest am Motorgehäuse 3 angeordneten Gegenring 8. Der Gegenring 8 kann in einer alternativen Ausführungsform auch in den Deckel 6 integriert sein.

Der Gleitring 7 ist in einem Dichtungsgehäuse 9 angeordnet, das auf dem Wellenabsatz 4 aufliegt und mit einem radial nach innen gerichteten Kragen 10 und einer Flachdichtung 11 zwischen der Stirnseite des Wellenabsatzes 4 und dem Schwungrad 5 drehfest zur Kurbelwelle 2 eingeklemmt ist. In dem Dichtungsgehäuse 9 befindet sich eine Wellfeder 12, die über einen Druckring 13 und einen Runddichtring 14 den Gleitring 7 gegen den Gegenring 8 drückt. Der dynamische Runddichtring 14 erfüllt dabei drei Funktionen. Er überträgt die Druckkräfte der Wellfeder 12 auf den Gleitring 7, er dichtet zwischen Dichtungsgehäuse 9 und einer konisch ausgebildeten Ausnehmung 15 des Gleitrings 7 ab und er zentriert den Gleitring 7 zum Dichtungsgehäuse 9 und somit zur Kurbelwelle 2 (Figur 2).

Außenseitig weist der Gleitring 7 eine Anzahl Ausnehmungen 16 auf, in die jeweils ein Gehäusearm 17 des Dichtungsgehäuses 9 klauenartig eingreift. Auf diese Weise ist der Gleitring 7 in axialer Richtung verschiebbar, während er in Umfangsrichtung über formschlüssige Verbindungen zwischen den Gehäusearmen 17 und den Nuten 16 drehfest mit dem Dichtungsgehäuse 9 und somit mit der Kurbelwelle 2 verbunden ist (Figur 3).

Die Enden 26 der Gehäusearme 17 sind nach der Montage der Wellfeder 12, des Druckringes 13, der Runddichtung 14 und des Gleitringes 7 soweit nach innen abbiegbar, daß diese den Gleitring 7 halten und die Teile 12, 13, 14, 7 zusammen mit dem Dichtungsgehäuse 9 eine vormontierte Einheit bilden (Figur 2).

In der Dichtfläche 18 des Gleitringes 7 sind eine Vielzahl spiralförmiger Nuten 19 (Spiralnuten) ausgebildet, die sich von dem inneren Rand 20 bis zu dem vom äußeren Rand 21 der Dichtfläche 18 entfernten Durchmesser 22 erstrecken. Die Spiralnuten 19 weisen in Umfangsrichtung am inneren Rand 20 ihre größte Breite auf und verengen sich kontinuierlich bis zu einem Endpunkt 23 auf dem Durchmesser 22. Die Spitzen 23 der Spiralnuten 19 weisen entgegen der Drehrichtung der Kurbelwelle 2.

Zwischen dem Durchmesser 22 und dem äußeren Rand 21 erstreckt sich ein Damm 24 über den gesamten Umfang der Dichtfläche 18, der bei Stillstand des Motors an der Dichtfläche 25 des Gegenringes 8 anliegt (Figur 4).

## Patentansprüche

1. Vorrichtung zur Abdichtung einer Kurbelwelle an ihrer Austrittsstelle aus dem Motorgehäuse eines Verbrennungsmotors, umfassend eine Kurbelwelle (2) sowie eine einzige Gleitringdichtung (1) mit einem drehfest an der Kurbelwelle angeordneten Gleitring (7) und einem drehfest am Motorgehäuse angeordneten Gegenring (8), oder mit einem drehfest am Motorgehäuse angeordneten Gleitring und einem drehfest an der Kurbelwelle angeordneten Gegenring, wobei der Gleitring (7) axial verschiebbar ist und durch ein Federmittel (12,13,14) in Richtung des Gegenringes (8) beaufschlagt ist,
**dadurch gekennzeichnet,**
daß in der Dichtfläche (18) des Gleitringes (7) und/oder in der Dichtfläche (25) des Gegenringes (8) Nuten (19) angeordnet sind, durch die bei Drehung der Kurbelwelle (2) ein Luftpolster zwischen den Dichtflächen (18, 25) der beiden Ringe (7, 8) erzeugbar ist.

2. Vorrichtung nach Anspruch 1, **dadurch gekennzeichnet,** daß die Nuten (19) von dem inneren Rand (20) bis zu einem vom äußeren Rand (21) entfernten Durchmesser (22) der Dichtfläche (18) sich erstrecken.

3. Vorrichtung nach Anspruch 1 oder 2, **dadurch gekennzeichnet,** daß die Nuten (19) spiralförmig angeordnet sind.

4. Vorrichtung nach einem der vorherigen Ansprüche, **dadurch gekennzeichnet,** daß der Gleitring (7) und das Federmittel (12) als vormontierbare Einheit in einem fest an die Kurbelwelle (2) montierbaren, insbesondere als Blech-Ziehteil ausgebildeten Dichtungsgehäuse (9) angeordnet sind.

5. Vorrichtung nach Anspruch 4, **dadurch gekennzeichnet,** daß das Federmittel (12) den Gleitring (7) über einen Runddichtring (14) beaufschlagt, der zwischen dem Gleitring (7) und dem Dichtungsgehäuse (9) abdichtet.

6. Vorrichtung nach einem der vorherigen Ansprüche, **dadurch gekennzeichnet,** daß der Gleitring (7) aus einem Kunstkohle-Werkstoff, insbesondere aus kunstharzimprägnierten Kohlegraphit gefertigt ist.

7. Vorrichtung nach einem der vorherigen Ansprüche, **dadurch gekennzeichnet,** daß der Gleitring (7) aus Kunststoff oder aus Metall gefertigt ist.

8. Vorrichtung nach einem der vorherigen Ansprüche, **dadurch gekennzeichnet,** daß der Gegenring (8) aus Aluminium oder aus Kunststoff, insbesondere aus glasfaserverstärktem Polyamid gefertigt ist.

9. Vorrichtung nach einem der vorherigen Ansprüche, **dadurch gekennzeichnet,** daß der Gegenring (8) in einen Deckel (6) zum Abschluß des Motorgehäuses (3) an der Austrittsstelle der Kurbelwelle (2) integriert ist.

10. Verfahren zur Herstellung einer Gleitringdichtung mit Nuten in der Dichtfläche des Gleitringes und/oder in der Dichtfläche des Gegenringes durch Gießen oder Pressen, **dadurch gekennzeichnet,** daß die Nuten (19) über das Gießwerkzeug bzw. über das Preßwerkzeug in die Dichtfläche (18) des Gleitringes (7) bzw. in die Dichtfläche (25) des Gegenringes (8) eingeformt werden.

## Claims

1. A device for sealing a crankshaft at its place of exit form the casing of an internal combustion engine, comprising a crankshaft (2) and a single slide ring seal (1), having a slide ring (7) disposed non-rotatably on the crankshaft and a counterring (8) disposed non-rotatably on the engine casing, or having a slide ring disposed non-rotatably on the engine casing and a counterring disposed non-rotatably on the crankshaft, the slide ring (7) being axially displaceable and urged in the direction of the counterring (8) by a spring means (12, 13, 14),
**characterised in that** the sealing face (18) of the slide ring (7) and/or the sealing face (25) of the counterring (8) is/ are formed with grooves (19) via which when the crankshaft (2) rotates an air cushion can be generated between the sealing faces (18, 25) of the two rings (7, 8).

2. A device according to claim 1,
**characterised in that** the grooves (19) extend from the inner edge (20) as far as a diameter (22) of the sealing face (18) remote from the outer edge (21).

3. A device according to claims 1 or 2,
**characterised in that** the grooves (19) are disposed spirally.

4. A device according to one of the preceding claims,
**characterised in that** the slide ring (7) and the spring means (12) are disposed as a premountable unit in a sealing casing (9), more particularly taking the form of a sheet metal drawn member, which can be mounted rigidly on the crankshaft (2).

5. A device according to claim 4,
**characterised in that** the spring means (12) acts on the slide ring (7) via a circular sealing ring (14) which provides a seal between the slide ring (7) and the sealing casing (9).

6. A device according to one of the preceding claims,
**characterised in that** the slide ring (7) is made from an artificial carbon material, more particularly synthetic resin impregnated carbon graphite.

7. A device according to one of the preceding claims,
**characterised in that** the slide ring (7) is made from plastic or metal.

8. A device according to one of the preceding claims,
**characterised in that** the counterring (8) is made from aluminium or plastics, more particularly glass fibre reinforced polyamide.

9. A device according to one of the preceding claims,
**characterised in that** the counterring (8) is integrated in a cover (6) for closing the engine casing (3) at the place of exit of the crankshaft (2).

10. A method of producing a slide ring seal, having grooves in the sealing face of the slide ring and/or in the sealing face of the counterring, by casting or pressing,
**characterised in that** the grooves (19) are formed by the casting/pressing tool in the sealing face (18) of the sLide ring (7) and the sealing face (25) of the counterring (8) respectively.

## Revendications

1. Dispositif d'étanchéité d'un vilebrequin à sa sortie du carter moteur d'un moteur à combustion interne, comprenant un vilebrequin (2) ainsi qu'une unique garniture étanche à anneau de glissement (1) avec un anneau de glissement (7) disposé fixe en rotation sur le vilebrequin et un contre-anneau (8) disposé fixe en rotation sur le carter moteur, ou bien avec un anneau de glissement disposé fixe en rotation sur le carter moteur et un contre-anneau disposé fixe en rotation sur le vilebrequin, l'anneau de glissement (7). état coulissant axialement et étant rappelé en direction du contre-anneau (8) par un organe à ressort (12, 13, 14),
**caractérisé en ce que** des rainures (19) sont disposées dans la surface d'étanchéité (18) de l'anneau de glissement (7) et/ou dans la surface d'étanchéité (25) du contre-anneau (8), par lesquelles un coussin d'air peut être engendré entre les surfaces d'étanchéité (18, 25) des deux anneaux (7, 8) lors de la rotation du vilebrequin (2).

2. Dispositif selon la revendication 1,
**caractérisé en ce que** les rainures (19) s'étendent depuis le bord intérieur (20) jusqu'à un diamètre (22) de la surface d'étanchéité (18) écarté du bord extérieur (21).

3. Dispositif selon la revendication 1 ou 2,
**caractérisé en ce que** les rainures (19) sont disposées en forme de spirale.

4. Dispositif selon l'une des revendications précédentes,
**caractérisé en ce que** l'anneau de glissement (7) et l'organe à ressort (12) sont disposés sous forme d'unité prémontable dans un boîtier de garniture d'étanchéité (9) pouvant être monté fixe sur le vilebrequin (2), en particulier réalisé sous forme de pièce emboutie en tôle.

5. Dispositif selon la revendication 4,
**caractérisé en ce que** l'organe à ressort (12) rappelle l'anneau de glissement (7) par l'intermédiaire d'un joint torique d'étanchéité (14) qui forme une étanchéité entre l'anneau de glissement (7) et le boîtier de garniture d'étanchéité (9).

6. Dispositif selon l'une des revendications précédentes,
**caractérisé en ce que** l'anneau de glissement (7) est fabriqué en un matériau en charbon artificiel, en particulier en graphite de charbon imprégné d'une résine synthétique.

7. Dispositif selon l'une des revendications précédentes,
**caractérisé en ce que** l'anneau de glissement (7) est fabriqué en matière synthétique ou en métal.

8. Dispositif selon l'une des revendications précédentes,
**caractérisé en ce que** le contre-anneau (8) est fabriqué en aluminium ou en matière synthétique, en particulier en polyamide renforcé par des fibres de verre.

9. Dispositif selon l'une des revendications précédentes,
**caractérisé en ce que** le contre-anneau (8) est intégré dans un couvercle (6) de fermeture du carter moteur (3) à la sortie du vilebrequin (2).

10. Procédé de fabrication par moulage ou par estampage d'une garniture étanche à anneau de glissement avec des rainures dans la surface d'étanchéité de l'anneau de glissement et/ou dans la surface d'étanchéité du contre-anneau,
caractérisé par le fait que les rainures (19) sont ménagées, par l'outil de moulage ou respectivement par l'outil d'estampage, dans la surface d'étanchéité (18) de l'anneau de glissement (7) ou respectivement dans la surface d'étanchéité (25) du contre-anneau (8).
